# EUROPEAN PATENT SPECIFICATION

(11) **EP 3 480 505 B1**
(45) Date of publication and mention of the grant of the patent: **05.05.2021**
(21) Application number: 16908100.7
(22) Date of filing: 04.07.2016
(51) Int. Cl.: F16L 21/00, F16L 23/04, F16L 37/133, F16L 43/00, F16L 37/12

(54) **PIPE JOINT AND WATER HEATER WITH SUCH A PIPE JOINT**
ROHRVERBINDUNG UND WASSERERHITZER MIT EINER SOLCHEN ROHVERBINDUNG
RACCORD DE TUYAUX ET CHAUFFE-EAU AVEC UN TEL RACCORD DE TUYAUX

(43) Date of publication of application: 08.05.2019
(73) Proprietor: Mitsubishi Electric Corporation, Chiyoda-ku Tokyo 100-8310 (JP)
(72) Inventor: NARUSE, Sho, Tokyo 100-8310 (JP); SUTO, Masayuki, Tokyo 100-8310 (JP); SAKUMA, Toshiyuki, Tokyo 100-8310 (JP)
(74) Representative: Witte, Weller & Partner Patentanwälte mbB
(86) International application number: PCT/JP2016/069761
(87) International publication number: WO 2018/008056

(56) References cited:
- DE-U1- 29 803 309
- GB-A- 2 459 515
- JP-A- H10 281 376
- JP-A- 2008 106 870
- JP-A- 2010 071 629
- JP-A- 2010 071 629
- JP-A- 2010 223 301
- JP-A- 2012 013 155
- JP-A- 2013 188 781
- JP-U- S5 486 717
- JP-U- S60 188 291
- US-A1- 2012 248 759

## Description

### [Technical Field]

The present invention relates to a pipe joint and a water heater.

### [Background Art]

PTL 1 describes a branch pipe connection portion as an example of a joint that connects pipes. The branch pipe connection portion described in PTL 1 is connected to a water supply header that is an example of a connection target. A flange-like protruding portion is formed on the branch pipe connection portion. A flange-like protruding portion is formed on the water supply header.

In PTL 1, the protruding portion of the branch pipe connection portion and the protruding portion of the water supply header are brought into contact with each other. As a result, the branch pipe connection portion is positioned. The protruding portion of the branch pipe connection portion and the protruding portion of the water supply header are sandwiched by a quick fastener. As a result, the branch pipe connection portion is fixed in a state of being prevented from falling out of the water supply header that is an example of a connection target.

US Application 2012/0248759 A1 shows barbed fittings, fitting insertion tools and methods relating to the same.

Japanese Patent Application 2010-071629 A shows a bending piping, a bending piping joint body and a water heater.

### [Citation List]

### [Patent Literature]

[PTL 1] Japanese Patent Application Publication No. 2002-89769

### [Summary]

### [Technical Problem]

A flange-like protruding portion for the positioning and the prevention of falling out is formed on a branch pipe connection portion that is an example of a joint described in PTL 1 above. However, when the design dimensions of the joint are restricted, for example, it may be difficult to form the flange-like protruding portion.

The present invention has been made in order to solve the problem as above. An object of the present invention is to provide a pipe joint that can be fixed to a connection target without the need of a flange-like protruding portion, and a water heater including the pipe joint.

### [Solution to Problem]

A pipe joint according to the present invention is defined by the technical features of claim 1. A water heater according to the present invention includes the abovementioned pipe joint.

### [Advantageous Effects of Invention]

According to the present invention, the pipe joint that can be fixed to the connection target without the need of the flange-like protruding portion, and the water heater including the pipe joint can be provided.

### [Brief Description of Drawings]

[Fig. 1]

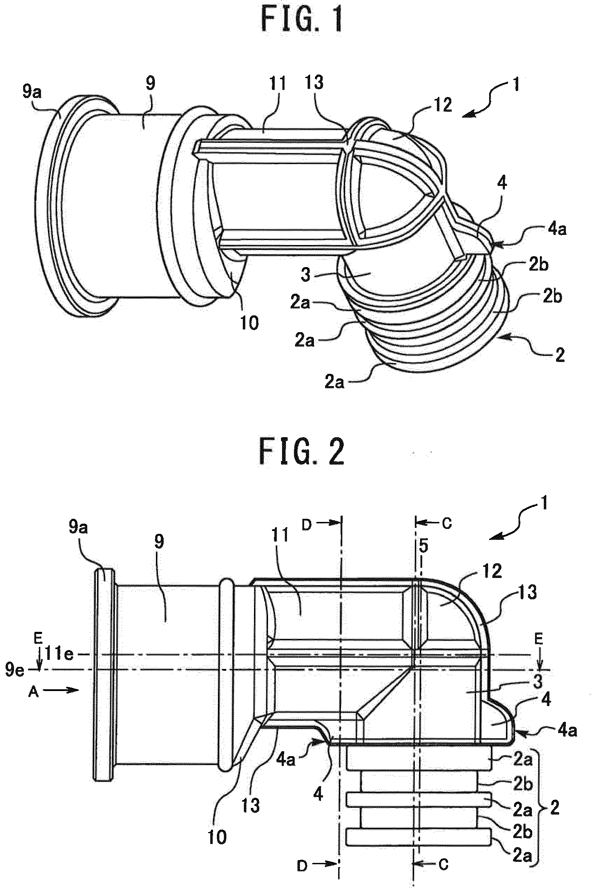

   Fig. 1 is a perspective view of a pipe joint of Embodiment 1.
[Fig. 2]
   Fig. 2 is a side view of the pipe joint of Embodiment 1.
[Fig. 3]

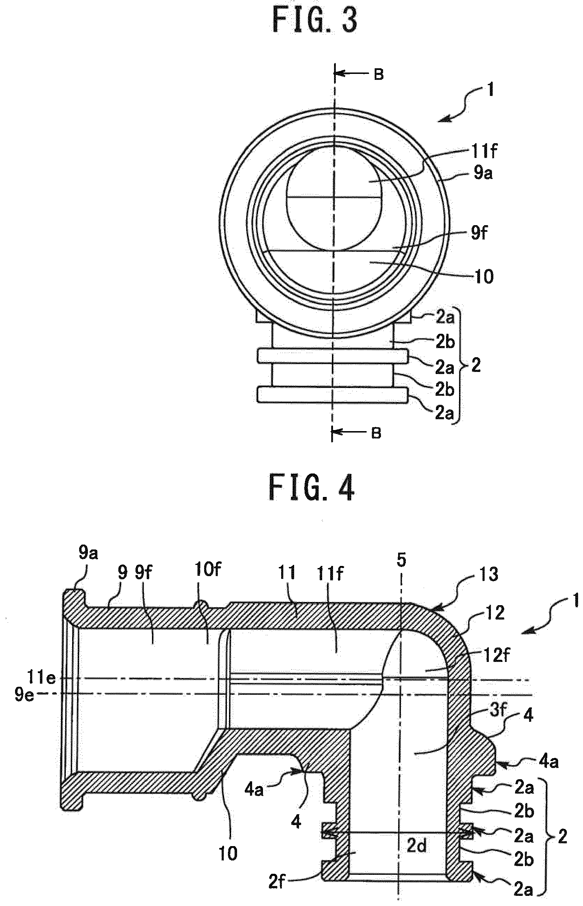

   Fig. 3 is a rear view of the pipe joint of Embodiment 1.
[Fig. 4]
   Fig. 4 is a cross-sectional side view of the pipe joint of Embodiment 1.
[Fig. 5]

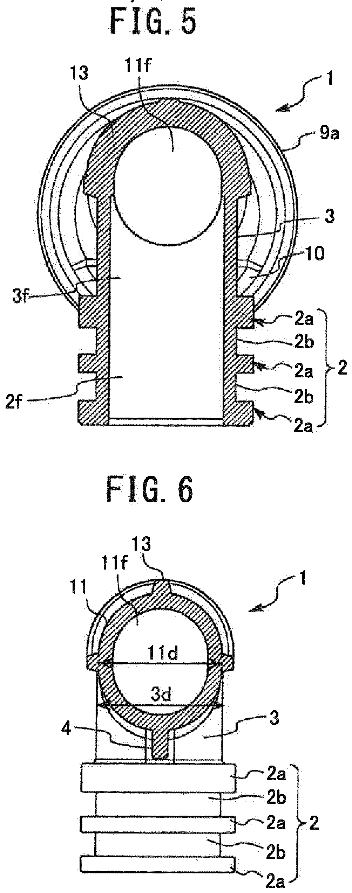

   Fig. 5 is a cross-sectional front view of the pipe joint of Embodiment 1.
[Fig. 6]
   Fig. 6 is a cross-sectional rear view of the pipe joint of Embodiment 1.
[Fig. 7]

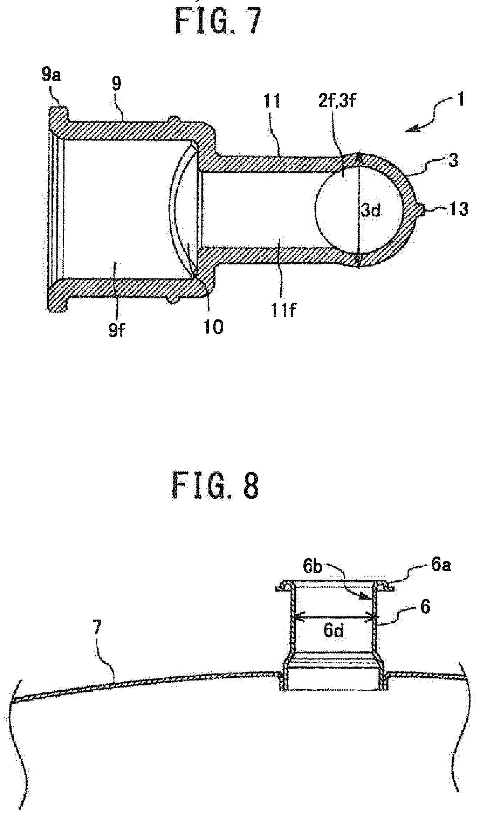

   Fig. 7 is a cross-sectional top view of the pipe joint of Embodiment 1.
[Fig. 8]
   Fig. 8 is a cross-sectional view of a pipe that is an example of a first connection target of the pipe joint of Embodiment 1.
[Fig. 9]

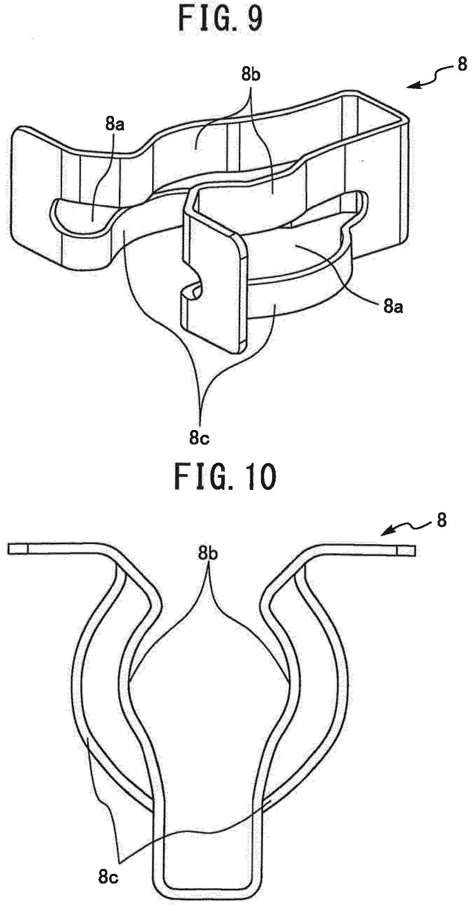

   Fig. 9 is a perspective view a fixture of Embodiment 1.
[Fig. 10]
   Fig. 10 is a top view of the fixture of Embodiment 1.
[Fig. 11]

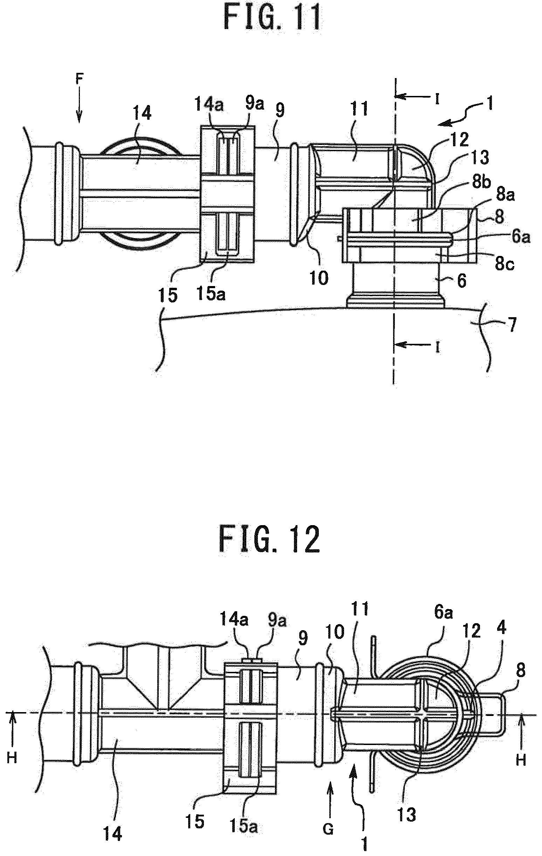

   Fig. 11 is a side view illustrating a connection state in Embodiment 1.
[Fig. 12]
   Fig. 12 is a top view illustrating the connection state in Embodiment 1.
[Fig. 13]

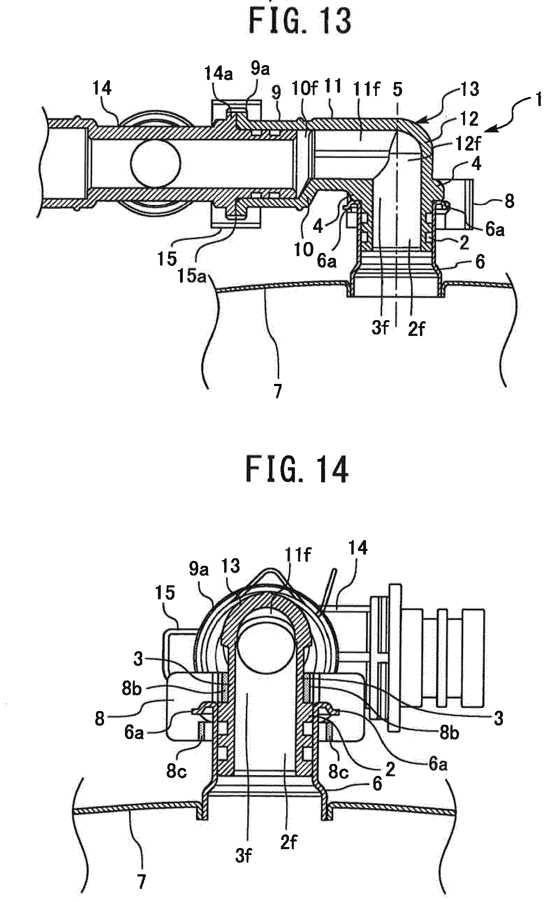

   Fig. 13 is a cross-sectional side view illustrating the connection state in Embodiment 1.
[Fig. 14]
   Fig. 14 is a cross-sectional front view illustrating the connection state in Embodiment 1.
[Fig. 15]

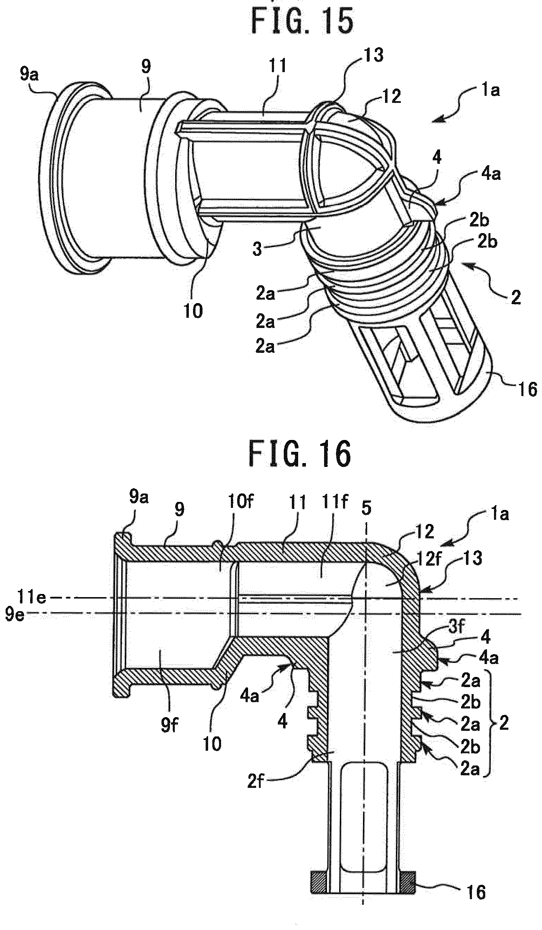

   Fig. 15 is a perspective view of a pipe joint of Embodiment 2.
[Fig. 16]
   Fig. 16 is a cross-sectional side view of the pipe joint of Embodiment 2.
[Fig. 17]

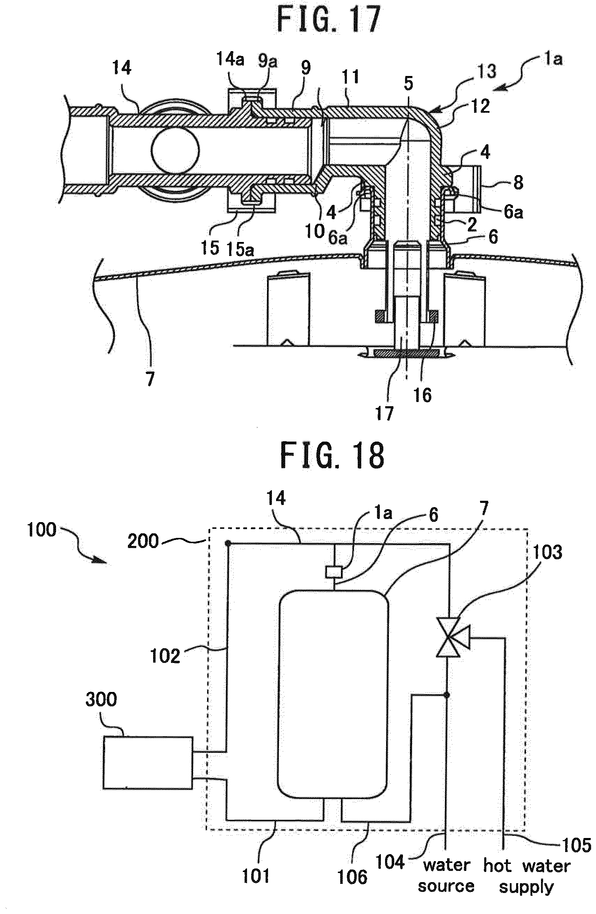

   Fig. 17 is a cross-sectional side view illustrating a connection state in Embodiment 2.
[Fig. 18]
   Fig. 18 is a configuration diagram of a water heater including the pipe joint of Embodiment 2.

### [Description of Embodiments]

Embodiments are described below with reference to the drawings. Common or corresponding elements in the drawings are denoted by the same symbols, and overlapping descriptions are simplified or omitted.

### Embodiment 1

Fig. 1 is a perspective view of a pipe joint 1 of Embodiment 1. Fig. 2 is a side view of the pipe joint 1 of Embodiment 1. Fig. 3 is a rear view of the pipe joint 1 of Embodiment 1. Fig. 3 illustrates the pipe joint 1 in Fig. 2 seen from the direction A. Fig. 4 is a cross-sectional side view of the pipe joint 1 of Embodiment 1. Fig. 4 illustrates a cross section taken from the position B-B in Fig. 3.

Fig. 5 is a cross-sectional front view of the pipe joint 1 of Embodiment 1. Fig. 6 is a cross-sectional rear view of the pipe joint 1 of Embodiment 1. Fig. 5 illustrates a cross section taken from the position C-C in Fig. 2. Fig. 6 illustrates a cross section taken from the position D-D in Fig. 2. Fig. 7 is a cross-sectional top view of the pipe joint 1 of Embodiment 1. Fig. 7 illustrates a cross section taken from the position E-E in Fig. 2.

The configuration of the pipe joint 1 is described with reference to Fig. 1 to Fig. 7. As illustrated in Fig. 1 to Fig. 7, the pipe joint 1 of this embodiment is an L-shaped part. The shape of the pipe joint according to the present invention may be a shape different from that of this embodiment. For example, the pipe joint according to the present invention may be T-shaped or I-shaped in a linear manner.

The pipe joint 1 includes a portion to be inserted 2, a portion to be clamped 3, and a protruding portion 4. The portion to be inserted 2 and the portion to be clamped 3 are cylindrical tubular parts. The portion to be clamped 3 is adjacent to the portion to be inserted 2 in an axial direction of the portion to be inserted 2. The protruding portion 4 is a part protruding from a part of the portion to be clamped 3.

The axial direction of the portion to be inserted 2 and an axial direction of the portion to be clamped 3 are parallel to each other. In this embodiment, a central axis of the portion to be inserted 2 and a central axis of the portion to be clamped 3 are coaxially located, for example. The central axis of the portion to be inserted 2 is hereinafter referred to as an axis 5. And, the central axis of the portion to be clamped 3 is hereinafter referred to as the axis 5.

Fig. 8 is a cross-sectional view of a pipe 6 that is an example of a first connection target of the pipe joint 1 of Embodiment 1. One end of the pipe 6 is connected to a hot water storage tank 7 as illustrated in Fig. 8, for example. A flange portion 6a is formed on the other end of the pipe 6. The portion to be inserted 2 of this embodiment is an example of a first portion to be inserted into the pipe 6.

The portion to be inserted 2 is formed to a shape matching the pipe 6. The portion to be inserted 2 has an outer peripheral surface 2a to be brought into contact with an inner peripheral surface 6b of the pipe 6. An outer diameter 2d of the portion to be inserted 2 is smaller than an outer diameter 6d of the pipe 6. An annular groove 2b in which a seal member is to be attached is formed in the portion to be inserted 2. The seal member is an O-ring, for example. The seal member is compressed by the portion to be inserted 2 and the pipe 6, to thereby prevent a liquid flowing through the pipe joint 1 and the pipe 6 from flowing out to the outside.

The portion to be clamped 3 of this embodiment is an example of a second portion adjacent to the first portion in an axial direction of the first portion. An outer diameter 3d of the portion to be clamped 3 is smaller than the outer diameter 2d of the portion to be inserted 2. That is, the outer diameter 3d of the portion to be clamped 3 is smaller than the outer diameter 2d of the pipe 6.

The portion to be clamped 3 is a part sandwiched by a fixture 8 that fixes the pipe joint 1 to the pipe 6. Fig. 9 is a perspective view of the fixture 8 of Embodiment 1. Fig. 10 is a top view of the fixture 8 of Embodiment 1.

The fixture 8 is formed by an elastic material such as a metal material, for example. The fixture 8 is a part having a shape that can clamp the portion to be clamped 3 and the pipe 6. As illustrated in Fig. 9 and Fig. 10, the fixture 8 includes a flange fitting portion 8a, a first clamp portion 8b, and a second clamp portion 8c.

The flange fitting portion 8a is a through groove-like part. The flange fitting portion 8a is a space in which the flange portion 6a of the pipe 6 is to be fitted. The first clamp portion 8b is a part that sandwiches and fastens the portion to be clamped 3. The first clamp portion 8b is curved in an arc form matching with an outer peripheral surface of the portion to be clamped 3. The second clamp portion 8c is a part that sandwiches and fastens the pipe 6. The second clamp portion 8c is curved in an arc form matching with an outer peripheral surface of the pipe 6.

The flange fitting portion 8a is formed between the first clamp portion 8b and the second clamp portion 8c. A width of the flange fitting portion 8a is equal to or close to a width of the flange portion 6a. When the pipe joint 1 is fixed to the pipe 6 that is an example of the first connection target, the flange portion 6a is fitted into the flange fitting portion 8a. The first clamp portion 8b sandwiches and fastens the portion to be clamped 3 in a state in which the flange portion 6a is fitted into the flange fitting portion 8a. The second clamp portion 8c sandwiches and fastens the pipe 6 in a state in which the flange portion 6a is fitted into the flange fitting portion 8a. In this manner, the pipe joint 1 is fixed to the pipe 6 by the fixture 8.

As illustrated in Fig. 1, Fig. 2, and Fig. 4, the protruding portion 4 included in the pipe joint 1 of this embodiment protrudes outward from a part of the portion to be clamped 3 in a radial direction of the portion to be clamped 3. The protruding portion 4 has a leading end 4a facing outward in the radial direction of the portion to be clamped 3.

As illustrated in Fig. 1, Fig. 2 and Fig. 4, a distance from the axis 5 that is the central axis of the portion to be inserted 2 and the portion to be clamped 3 to the leading end 4a is longer than a distance from the axis 5 to the outer peripheral surface 2a. That is, the leading end 4a is located on the outside of the outer peripheral surface 2a in the radial directions of the portion to be inserted 2 and the portion to be clamped 3.

When the portion to be inserted 2 is inserted into the pipe 6, the protruding portion 4 comes into contact with the flange portion 6a on the other end of the pipe 6. The protruding portion 4 restricts the portion to be inserted 2 from moving to the inside of the pipe 6 by coming into contact with the flange portion 6a. The protruding portion 4 of this embodiment is a part that positions the pipe joint 1 with respect to the pipe 6 that is an example of the first connection target.

As described above, the pipe joint 1 of this embodiment is an L-shaped part. As illustrated in Fig. 1 to Fig. 7, the pipe joint 1 includes a connection portion 9, a tapered portion 10, and the intermediate portion 11. The connection portion 9 and the intermediate portion 11 are cylindrical tubular parts. For example, the intermediate portion 11 is formed to be narrower than the connection portion 9.

The tapered portion 10 is a tapered tubular part. The connection portion 9 and the intermediate portion 11 are connected to each other by the tapered portion 10. The tapered portion 10 is adjacent to the connection portion 9 and the intermediate portion 11. The axial directions of the connection portion 9, the tapered portion 10, and the intermediate portion 11 of this embodiment are perpendicular or nearly perpendicular to the axial directions of the portion to be inserted 2 and the portion to be clamped 3. A perpendicular state or a nearly perpendicular state is herein simply referred to as perpendicular.

The pipe joint 1 includes a curved portion 12. The curved portion 12 is a tubular part curved by an angle of 90 degrees. The portion to be clamped 3 and the intermediate portion 11 are connected to each other by the curved portion 12. An outer shape of the pipe joint 1 of this embodiment is an L shape by the portion to be inserted 2, the portion to be clamped 3, the connection portion 9, the tapered portion 10, the intermediate portion 11, and the curved portion 12.

The connection portion 9 is an example of a third portion connected to a pipe that is a second connection target. One end of the connection portion 9 is continuous with the tapered portion 10. A flange portion 9a is formed on the other end of the connection portion 9. The flange portion 9a is a part similar to the flange portion 6a.

The intermediate portion 11 is between the connection portion 9 and the portion to be clamped 3. The intermediate portion 11 is an example of a fourth portion between the second portion and the third portion. The tapered portion 10 is an example of a fifth portion connecting the third portion and the fourth portion to each other.

As illustrated in Fig. 2 and Fig. 4, a central axis 9e of the connection portion 9 is between a central axis 11e of the intermediate portion 11 and the portion to be inserted 2 in this embodiment. As illustrated in Fig. 2 and Fig. 4, the protruding portion 4 is within a range from one end to the other end of the connection portion 9 in the axial directions of the portion to be inserted 2 and the portion to be clamped 3.

The pipe joint 1 of this embodiment includes a reinforcement rib 13. The reinforcement rib 13 is for enhancing a strength of the pipe joint 1. The pipe joint 1 is molded by resin such as PPS. PPS is an abbreviation of polyphenylene sulfide. The reinforcement rib 13 also has an effect of suppressing deformation of the pipe joint 1 due to aftercontraction in the molding. For example, the pipe joint 1 is prevented from warping after the molding by the reinforcement rib 13.

The reinforcement rib 13 is formed on an outer surface of the pipe joint 1. The reinforcement rib 13 is formed on the outer surface of the portion to be clamped 3, an outer surface of the curved portion 12, and an outer surface of the intermediate portion 11 in a continuous manner, for example. As illustrated in Fig. 1, Fig. 2, and Fig. 4, the reinforcement rib 13 is formed so as to be continuous with the protruding portion 4. In other words, the reinforcement rib 13 and the protruding portion 4 are integrated.

Spaces serving as a flow path through which a liquid flows are formed in the pipe joint 1 configured as above. A space in the portion to be inserted 2 is referred to as a space 2f. A space in the portion to be clamped 3 is referred to as a space 3f. A space in the connection portion 9 is referred to as a space 9f. A space in the tapered portion 10 is referred to as a space 10f. A space in the intermediate portion 11 is referred to as a space 11f. A space in curved portion 12 is referred to as a space 12f. The space 2f, the space 3f, the space 9f, the space 10f, the space 11f, and the space 12f are continuous with each other.

As illustrated in Fig. 4 and Fig. 7, shapes of the space 2f and the space 3f are columnar. A shape of a cross section of the space 2f perpendicular to the axis 5 is circular. A shape of a cross section of the space 3f perpendicular to the axis 5 is circular. Meanwhile, a shape of a cross section of the space 11f perpendicular to the central axis 11e is a shape obtained by attaching semicircles on both ends of a rectangle, for example. The shape of the cross section of the space 11f perpendicular to the central axis 11e is a shape having a longitudinal direction and a short direction.

In this embodiment, the shape of the cross section the space 3f perpendicular to the axis 5 is different from the shape of the cross section of the space 11f perpendicular to the central axis 11e as described above. A cross-sectional area of the space 3f perpendicular to the axis 5 is equal to a cross-sectional area of the space 11f perpendicular to the central axis 11e.

In this embodiment, the intermediate portion 11 is formed to be narrower than the connection portion 9 as described above. For example, the shape of the space 11f is narrower than the space 9f. The cross-sectional area of the space 11f perpendicular to the central axis 11e is smaller than a cross-sectional area of the space 9f perpendicular to the central axis 9e. As illustrated in Fig. 3 and Fig. 4, an outline of the space 11f is inscribed in an outline of the space 9f, when seen along the axial directions of the connection portion 9 and the intermediate portion 11.

The space 10f in the tapered portion 10 connects the space 9f and the space 11f to each other. A cross-sectional area of the space 10f perpendicular to the central axis lie gradually decreases from the space 9f toward the space 11f.

Next, a state in which the pipe joint 1 is connected to the pipe 6 and a pipe 14 is described. The pipe 14 is an example of a pipe serving as the second connection target. Fig. 11 is a side view illustrating a connection state in Embodiment 1. Fig. 12 is a top view illustrating the connection state in Embodiment 1. Fig. 12 illustrates the connection state in Fig. 11 seen from the direction F.

Fig. 13 is a cross-sectional side view illustrating the connection state in Embodiment 1. Fig. 13 illustrates a cross section taken from the position H-H in Fig. 12. Fig. 14 is a cross-sectional front view illustrating the connection state in Embodiment 1. Fig. 14 illustrates a cross section taken from the position I-I in Fig. 11.

As illustrated in Fig. 11 to Fig. 14, a part of the pipe 14 on one end side thereof is connected to the connection portion 9. A flange portion 14a is formed on the part of the pipe 14 on the one end side thereof. The flange portion 14a is a part similar to the flange portion 9a.

The connection portion 9 and the pipe 14 are fixed by a fixture 15. The fixture 15 is a part similar to the fixture 8. The fixture 15 includes a flange fitting portion 15a in which the flange portion 9a and the flange portion 14a are to be fitted. The flange fitting portion 15a is a groove-like part similar to the flange fitting portion 8a. The fixture 15 sandwiches and fastens the connection portion 9 and the pipe 14 in a state in which the flange portion 9a and the flange portion 14a are fitted into the flange fitting portion 15a. In this manner, the connection portion 9 and the pipe 14 are fixed.

As illustrated in Fig. 11 to Fig. 14, the pipe 14 that is an example of the second connection target is branched in a T shape. Besides this embodiment, the second connection target may be an I-shaped linear pipe or an L-shaped pipe, for example. A seal member such as an O-ring for maintaining liquid tightness may be attached between the connection portion 9 and the pipe 14.

As described above and illustrated in Fig. 11 to Fig. 14, the pipe joint 1 is fixed to the pipe 6 by the fixture 8. As illustrated in Fig. 14, the portion to be clamped 3 is sandwiched and fastened by the first clamp portion 8b. As illustrated in Fig. 13, the protruding portion 4 comes into contact with the flange portion 6a. The protruding portion 4 prevents the pipe joint 1 from being excessively inserted into the pipe 6.

As illustrated in Fig. 14, a level difference is formed between the portion to be clamped 3 and the portion to be inserted 2. The first clamp portion 8b is located in the level difference between the portion to be clamped 3 and the portion to be inserted 2. The first clamp portion 8b comes into contact with the portion to be inserted 2. As a result, the pipe joint 1 is prevented from falling out of the pipe 6. According to this embodiment, the pipe joint 1 that can be fixed to the first connection target without the need of a flange-like protruding portion can be obtained by the configuration as above.

The pipe joint 1 of this embodiment includes the protruding portion 4 instead of a flange-like protruding portion. A protruding portion extending around the entire outer periphery of the pipe joint 1 is unnecessary, and hence materials costs at molding the pipe joint 1 can be reduced. In addition, the entire size of the pipe joint 1 can be reduced.

As illustrated in Fig. 11 to Fig. 14, the protruding portion 4 can be formed in a position that does not interfere with the fixture 8. Here, the axial direction of the portion to be inserted 2 is a height direction of the pipe joint 1. And, the axial direction of the portion to be clamped 3 is the height direction of the pipe joint 1. According to this embodiment, a size of the pipe joint 1 in the height direction can be a minimum size needed for the attachment of the fixture 8.

As illustrated in Fig. 2 and Fig. 4, for example, the pipe joint 1 may include a pair of the protruding portions 4 opposed to each other with respect the axis 5. As a result, the pipe joint 1 is fixed to the pipe 6 more reliably without increasing the size of the pipe joint 1 in the height direction.

The pipe joint 1 of this embodiment includes the reinforcement rib 13 formed so as to be continuous with the protruding portion 4. The protruding portion 4 can enhance the strength of the pipe joint 1 by being integrated with the reinforcement rib 13.

The pipe joint according to the present invention is particularly suitable for an object having a curved shape of which size in the height direction can be restricted when designed as in this embodiment.

In this embodiment, and according to the invention, the protruding portion 4 is within the range from one end to the other end of the connection portion 9 in the axial direction of the portion to be inserted 2. As a result, according to this embodiment, the size of the pipe joint 1 in the height direction can be reduced despite the protruding portion 4 for fixing the pipe joint 1. The central axis 9e is between the central axis 11e of the intermediate portion 11 and the portion to be inserted 2. The size of the pipe joint 1 in the height direction can be further reduced by setting the position relationship between the central axis 9e and the central axis 11e to be that as in this embodiment.

In this embodiment, the outline of the space 11f is inscribed in the outline of the space 9f, when seen along the axial directions of the connection portion 9 and the intermediate portion 11. As a result, the moldability of the pipe joint 1 becomes better. The pipe joint 1 can be molded by a simple mold and a simple pin extraction process without the need of a complicated process for an undercut, for example. Besides this embodiment, the space 9f may be formed to be narrower than the space 11f, for example. An effect similar to that of this embodiment can be obtained even when the outline of the space 9f is inscribed in the outline of the space 11f.

The cross-sectional area of the space 10f in the tapered portion 10 of this embodiment perpendicular to the central axis 11e gradually decreases from the space 9f toward the space 11f. As a result, a disturbance of the flow of the liquid that occurs between the pipe 14 and the connection portion 9 is suppressed. According to this embodiment, the pressure loss of a liquid flowing in the pipe joint 1 is reduced. As a result, a reduction of a flow rate of a liquid supplied from the hot water storage tank 7 is suppressed, for example.

An outer diameter 11d of the intermediate portion 11 may be equal to or less than the outer diameter 3d of the portion to be clamped 3. The outer diameter 11d means the size of the intermediate portion 11 in the short direction of the intermediate portion 11. A part of the fixture 8 may come into contact with the intermediate portion 11 depending on a shape and a size of the pipe joint 1. A size of a part of the intermediate portion 11 that comes into contact with the fixture 8 is smaller than the outer diameter 11d. According to this example, excessive expansion of the fixture 8 by the intermediate portion 11 is suppressed. As a result, the fixture 8 is prevented from falling out. According to this embodiment, the pipe joint 1 is fixed to the pipe 6 more reliably.

In this embodiment, the cross-sectional area of the space 3f perpendicular to the axis 5 and the cross-sectional area of the space 11f perpendicular to the central axis 11e are equal to each other. As a result, the pressure loss of the liquid flowing in the pipe joint 1 is reduced. Besides this embodiment, the shape of the cross section of the space 3f perpendicular to the axis 5 may be the same as the shape of the cross section of the space 11f perpendicular to the central axis 11e, for example.

The flange portion 9a does not necessarily need to be formed on the connection portion 9. A structure of the connection portion 9 connected to the pipe 14 that is an example of the second connection target may be a structure similar to the portion to be inserted 2, the portion to be clamped 3, and the protruding portion 4, for example. The flange-like protruding portions do not necessarily need to be formed on both ends of the pipe joint 1.

### Embodiment 2

Next, Embodiment 2 is described. Fig. 15 is a perspective view of a pipe joint 1a of Embodiment 2. Fig. 16 is a cross-sectional side view of the pipe joint 1a of Embodiment 2. Fig. 17 is a cross-sectional side view illustrating a connection state in Embodiment 2. Embodiment 2 is described with reference to the drawings with a focus on the differences from Embodiment 1. Common or corresponding elements regarding Embodiment 1 are denoted by the same symbols, and overlapping descriptions are simplified or omitted.

The pipe joint 1a of this embodiment includes a baffle attachment portion 16 in addition to the parts of the pipe joint 1 of Embodiment 1. The baffle attachment portion 16 is a part in which a baffle 17 in the hot water storage tank 7 is to be attached. The baffle attachment portion 16 is provided in a position arranged in the axial direction with respect to the portion to be inserted 2. As illustrated in Fig. 17, when the portion to be inserted 2 is inserted into the pipe 6, the baffle attachment portion 16 and the baffle 17 are connected to each other.

A configuration of the pipe joint 1a of this embodiment other than the baffle attachment portion 16 is the same as the configuration of the pipe joint 1 of Embodiment 1. As described in this embodiment, a configuration of the pipe joint according to the present invention may be obtained by adding the configuration of the baffle attachment portion 16 and the like to the pipe joint 1.

Fig. 18 is a configuration diagram of a water heater 100 including the pipe joint 1a of Embodiment 2. The pipe joint 1a including the baffle attachment portion 16 of this embodiment is particularly suitable for the water heater 100 including the hot water storage tank 7.

The water heater 100 includes a hot water storage tank unit 200 and a heat pump unit 300. The hot water storage tank 7 is included in the hot water storage tank unit 200. Water having different temperatures is stored the hot water storage tank 7 in a layered state.

The water heater 100 includes the pipe 14 branched in a T shape, for example. The pipe 14 includes a first end portion, a second end portion, and a third end portion. The flange portion 14a is formed on the first end portion of the pipe 14, for example. As illustrated in Fig. 17 and Fig. 18, the first end portion of the pipe 14 is connected to the pipe 6 via the pipe joint la. The pipe 6 is attached to an upper part of the hot water storage tank 7.

An inflow port of the heat pump unit 300 is connected to a lower part of the hot water storage tank 7 by a pipe 101. Low temperature water is supplied to the heat pump unit 300 from the lower part of the hot water storage tank 7 via the pipe 101. The water heated by the heat pump unit 300 becomes high-temperature hot water.

An outflow port of the heat pump unit 300 is connected to the second end portion of the pipe 14 by a pipe 102. The heat pump unit 300 supplies the high-temperature hot water to the upper part of the hot water storage tank 7 via the pipe 102, the pipe 14, the pipe joint 1a, and the pipe 6 in the stated order.

The third end portion of the pipe 14 is connected to a first inflow port of a three-way valve 103. A second inflow port of the three-way valve 103 is connected to a water source by a pipe 104. An outflow port of the three-way valve 103 is connected to a hot water supply destination by a pipe 105. High-temperature hot water is supplied to the three-way valve 103 from the hot water storage tank 7 or the heat pump unit 300 via the pipe 14. Low-temperature water is supplied to the three-way valve 103 from the water source via the pipe 104. The three-way valve 103 mixes the low-temperature water and the high-temperature hot water together. The three-way valve 103 is a device capable of supplying the water obtained by mixing the low-temperature water and the high-temperature hot water together to the hot water supply destination via the pipe 105.

One end of a pipe 106 is connected to the pipe 104 at the middle of the pipe 104. The other end of the pipe 106 is connected to the lower part of the hot water storage tank 7. Low-temperature water is supplied to the lower part of the hot water storage tank 7 from the water source via the pipe 104 and the pipe 106.

As described above, the high-temperature hot water heated by the heat pump unit 300 is supplied to the upper part of the hot water storage tank 7. In this embodiment, the baffle attachment portion 16 and the baffle 17 prevent the high-temperature hot water supplied to the upper part of the hot water storage tank 7 from diffusing. As a result, the state in which water having different temperatures is layered in the hot water storage tank 7 can be maintained.

The size of the pipe joint 1a of this embodiment in the height direction can be reduced as with the pipe joint 1 of Embodiment 1. As a result, the size from a top board of the hot water storage tank unit 200 to the upper part of the hot water storage tank 7 can be reduced, for example. According to this embodiment, an entire size of the hot water storage tank unit 200 or an entire size of the water heater 100 can be reduced.

### [Industrial Applicability]

The present invention can be used for a pipe joint connected to a pipe through which liquid flows and a water heater including the pipe joint, for example.

### [Reference Signs List]

- 1: Pipe joint
- 1a: Pipe joint
- 2: Portion to be inserted
- 2a: Outer peripheral surface
- 2b: Groove
- 2d: Outer diameter
- 2f: Space
- 3: Portion to be clamped
- 3f: Space
- 4: Protruding portion
- 5: Axis
- 6: Pipe
- 6a: Flange portion
- 6b: Inner peripheral surface
- 6d: Outer diameter
- 7: Hot water storage tank
- 8: Fixture
- 8a: Flange fitting portion
- 8b: First clamp portion
- 8c: Second clamp portion
- 9: Connection portion
- 9a: Flange portion
- 9e: Central axis
- 9f: Space
- 10: Tapered portion
- 10f: Space
- 11: Intermediate portion
- 11d: Outer diameter
- 11e: Central axis
- 11f: Space
- 12: Curved portion
- 12f: Space
- 13: Reinforcement rib
- 14: Pipe
- 14a: Flange portion
- 15: Fixture
- 15a: Flange fitting portion
- 16: Baffle attachment portion
- 17: Baffle
- 100: Water heater
- 101: Pipe
- 102: Pipe
- 103: Three-way valve
- 104: Pipe
- 105: Pipe
- 106: Pipe
- 200: Hot water storage tank unit
- 300: Heat pump unit

## Claims

1. A pipe joint (1), comprising:
a first portion (2) having an outer peripheral surface (2a) to be brought into contact with an inner peripheral surface (6b) of a pipe (6) which is a first connection target;
a second portion (3) adjacent to the first portion (2) in an axial direction of the first portion (2)
a third portion (9) connected to a pipe (14) which is a second connection target;
a fourth portion (11) between the second portion (3) and the third portion (9); and
a protruding portion (4) configured to protrude outward from a part of the second portion (3) in a radial direction of the second portion (3), wherein:
the axial direction of the first portion (2) and an axial direction of the second portion (3) are parallel to each other;
the protruding portion (4) has a leading end (4a) facing outward in the radial direction of the second portion (3);
the leading end (4a) is located on an outside of the outer peripheral surface (2a) of the first portion (2) in a radial direction of the first portion (2) and the radial direction of the second portion (3); and
an axial direction of the third portion (9) and an axial direction of the fourth portion (11) are perpendicular to the axial direction of the first portion (2);
**characterized in that**
an outer diameter (3d) of the second portion (3) is smaller than an outer diameter (2d) of the first portion (2);
the protruding portion (4) is within a range from one end to the other end of the third portion (9) in the axial direction of the first portion (2).

2. The pipe joint (1) according to claim 1, further comprising a pair of the protruding portions (4) opposed to each other with respect to a central axis of the second portion (3).

3. The pipe joint (1) according to claim 1 or 2, further comprising a reinforcement rib (13) formed so as to be continuous with the protruding portion (4).

4. The pipe joint (1) according to claim 1, wherein
a central axis of the third portion (9) is between a central axis of the fourth portion (11) and the first portion (2) in the axial direction of the first portion (2).

5. The pipe joint (1) according to claim 1 or 4, wherein
one of an outline of a space (9f) formed in the third portion (9) and an outline of a space (11f) formed in the fourth portion (11) is inscribed in the other outline, when seen along the axial direction of the third portion (9).

6. The pipe joint (1) according to any one of claims 1, 4 and 5, further comprising:
a tapered fifth portion (10) configured to connect the third portion (9) and the fourth portion (11) to each other, wherein:
one of a space (9f) formed in the third portion (9) and a space (11f) formed in the fourth portion (11) has a smaller cross-sectional area perpendicular to the axial direction of the third portion (9) than a cross-sectional area of the other space perpendicular to the axial direction of the third portion (9); and
a cross-sectional area of a space (10f) formed in the fifth portion (10) perpendicular to the axial direction of the third portion (9) gradually decreases from the other space to the one space.

7. The pipe joint (1) according to any one of claims 1 and 4 to 6, wherein
a size (11d) of the fourth portion (11) in a short direction of the fourth portion (11) is equal to or less than the outer diameter (3d) of the second portion (3).

8. The pipe joint (1) according to any one of claims 1 and 4 to 7, wherein
a cross-sectional area of a space (3f) formed in the second portion (3) perpendicular to the axial direction of the second portion (3) is equal to a cross-sectional area of a space (11f) formed in the fourth portion (11) perpendicular to the axial direction of the fourth portion (11).

9. A water heater (100), comprising the pipe joint (1) according to any one of claims 1 to 8.

## Patentansprüche

1. Rohrverbindung (1), mit:
einem ersten Abschnitt (2), der eine Außenumfangsfläche (2a) aufweist, die in Kontakt mit einer Innenumfangsfläche (6b) eines Rohrs (6) zu bringen ist, das ein erstes Verbindungsziel ist;
einem zweiten Abschnitt (3) benachbart zu dem ersten Abschnitt (2) in einer Axialrichtung des ersten Abschnitts (2),
einem dritten Abschnitt (9), der mit einem Rohr (14) verbunden ist, das ein zweites Verbindungsziel ist;
einem vierten Abschnitt (11) zwischen dem zweiten Abschnitt (3) und dem dritten Abschnitt (9); und
einem Vorsprungsabschnitt (4), der dazu konfiguriert ist, nach außen von einem Teil des zweiten Abschnitts (3) in einer Radialrichtung des zweiten Abschnitts (3) vorzuspringen, wobei:
die Axialrichtung des ersten Abschnitts (2) und eine Axialrichtung des zweiten Abschnitts (3) parallel zueinander sind;
der Vorsprungsabschnitt (4) ein Vorderende (4a) aufweist, das nach außen in der Radialrichtung des zweiten Abschnitts (3) weist;
wobei das Vorderende (4a) auf eine Außenseite der Außenumfangsfläche (2) des ersten Abschnitts (2) in einer Radialrichtung des ersten Abschnitts (2) und der Radialrichtung des zweiten Abschnitts (3) angeordnet ist; und
eine Axialrichtung des dritten Abschnitts (9) und eine Axialrichtung des vierten Abschnitts (11) senkrecht zu der Axialrichtung des ersten Abschnitts (2) sind;
**dadurch gekennzeichnet, dass**
ein Außendurchmesser (3d) des zweiten Abschnitts (3) geringer als ein Außendurchmesser (2d) des ersten Abschnitts (2) ist;
der Vorsprungsabschnitt (4) innerhalb eines Bereichs von einem Ende zu dem anderen Ende des dritten Abschnitts (9) in der Axialrichtung des ersten Abschnitts (2) ist.

2. Rohrverbindung (1) nach Anspruch 1, des Weiteren mit einem Paar der Vorsprungabschnitte (4), die entgegengesetzt zueinander in Bezug auf eine Zentralachse des zweiten Abschnitts (3) sind.

3. Rohrverbindung (1) nach Anspruch 1 oder 2, des Weiteren mit einer Verstärkungsrippe (13), die nahezu ausgebildet ist, fortlaufend mit dem Vorsprungsabschnitt (4) zu sein.

4. Rohrverbindung (1) nach Anspruch 1, wobei
eine Zentralachse des dritten Abschnitts (9) zwischen einer Zentralachse des vierten Abschnitts (11) und dem ersten Abschnitt (2) in Axialrichtung des ersten Abschnitts (2) ist.

5. Rohrverbindung (1) nach Anspruch 1 oder 4, wobei
eines von einem Umriss eines Zwischenraums (9f), der in dem dritten Abschnitt (9) ausgebildet ist, und einem Umriss eines Zwischenraums (11f), der in dem vierten Abschnitt (11) ausgebildet ist, in dem anderen Umriss eingeschrieben ist, wenn betrachtet entlang der Axialrichtung des dritten Abschnitts (9).

6. Rohrverbindung (1) nach einem der Ansprüche 1, 4 und 5, des Weiteren mit:
einem zulaufenden fünften Abschnitt (10), der dazu konfiguriert ist, den dritten Abschnitt (9) und den vierten Abschnitt (11) miteinander zu verbinden, wobei:
eines von einem Zwischenraum (9f), der in dem dritten Abschnitt (9) ausgebildet ist, und einem Zwischenraum (11f), der in dem vierten Abschnitt (11) ausgebildet ist, einen kleineren Querschnittsbereich senkrecht zu der Axialrichtung des dritten Abschnitts (9) als ein Querschnittsbereich des anderen Zwischenraums senkrecht zu der Axialrichtung des dritten Abschnitts (9) aufweist; und
einen Querschnittsbereich eines Zwischenraums (10f), der in dem fünften Abschnitt (10) senkrecht zu der Axialrichtung des dritten Abschnitts (9) ausgebildet ist, zunehmend von dem anderen Zwischenraum zu dem einen Zwischenraum abnimmt.

7. Rohrverbindung (1) nach einem der Ansprüche 1 und 4 bis 6, wobei
eine Größe (11d) des vierten Abschnitts (11) in einer kurzen Richtung des vierten Abschnitts (11) gleich zu oder weniger als der Außendurchmesser (3d) des zweiten Abschnitts (3) ist.

8. Rohrverbindung (1) nach einem der Ansprüche 1 und 4 bis 7, wobei
ein Querschnittsbereich eines Zwischenraums (3f), der in dem zweiten Abschnitt (3) senkrecht zu der Axialrichtung des zweiten Abschnitts (3) ausgebildet ist, gleich zu einem Querschnittsbereich eines Zwischenraums (11f) ist, der in dem vierten Abschnitt (11) senkrecht zu der Axialrichtung des vierten Abschnitts (11) ausgebildet ist.

9. Wassererwärmer (100), mit der Rohrverbindung (1) nach einem der Ansprüche 1 bis 8.

## Revendications

1. Raccord de tuyau (1), comprenant :
une première portion (2) ayant une surface périphérique extérieure (2a) prévue pour être amenée en contact avec une surface périphérique intérieure (6b) d'un tuyau (6) qui constitue un premier élément à connecter ;
une deuxième portion (3) adjacente à la première portion (2) dans une direction axiale de la première portion (2),
une troisième portion (9) connectée à un tuyau (14) qui constitue un deuxième élément à connecter ;
une quatrième portion (11) entre la deuxième portion (3) et la troisième portion (9) ; et
une portion en saillie (4) configurée pour faire saillie vers l'extérieur depuis une partie de la deuxième portion (3) dans une direction radiale de la deuxième portion (3), dans lequel :
la direction axiale de la première portion (2) et une direction axiale de la deuxième portion (3) sont parallèles l'une à l'autre ;
la portion en saillie (4) présente une extrémité avant (4a) orientée vers l'extérieur dans la direction radiale de la deuxième portion (3) ;
l'extrémité avant (4a) est située sur une partie extérieure de la surface périphérique extérieure (2) de la première portion (2) dans une direction radiale de la première portion (2) et dans la direction radiale de la deuxième portion (3) ; et
une direction axiale de la troisième portion (9) et une direction axiale de la quatrième portion (11) sont perpendiculaires à la direction axiale de la première portion (2) ;
**caractérisé en ce que**
un diamètre extérieur (3d) de la deuxième portion (3) est inférieur à un diamètre extérieur (2d) de la première portion (2) ;
la portion en saillie (4) est dans une plage allant d'une extrémité à l'autre extrémité de la troisième portion (9) dans la direction axiale de la première portion (2).

2. Raccord de tuyau (1) selon la revendication 1, comprenant en outre une paire des portions en saillie (4) opposées l'une à l'autre par rapport à un axe central de la deuxième portion (3).

3. Raccord de tuyau (1) selon la revendication 1 ou 2, comprenant en outre une nervure de renforcement (13) formée de manière à être continue avec la portion en saillie (4).

4. Raccord de tuyau (1) selon la revendication 1, dans lequel
un axe central de la troisième portion (9) est compris entre un axe central de la quatrième portion (11) et de la première portion (2) dans la direction axiale de la première portion (2).

5. Raccord de tuyau (1) selon la revendication 1 ou 4, dans lequel
l'un parmi un pourtour d'un espace (9f) formé dans la troisième portion (9) et un pourtour d'un espace (11f) formé dans la quatrième portion (11) est inscrit dans l'autre pourtour, vu le long de la direction axiale de la troisième portion (9).

6. Raccord de tuyau (1) selon l'une quelconque des revendications 1, 4 et 5, comprenant en outre :
une cinquième portion filetée (10) configurée pour raccorder la troisième portion (9) et la quatrième portion (11) l'une à l'autre, dans lequel :
l'un parmi un espace (9f) formé dans la troisième portion (9) et un espace (11f) formé dans la quatrième portion (11) présente une surface en section transversale perpendiculaire à la direction axiale de la troisième portion (9) qui est inférieure à une surface en section transversale de l'autre espace perpendiculaire à la direction axiale de la portion (9) ; et
une surface en section transversale d'un espace (10f) formé dans la cinquième portion (10) perpendiculaire à la direction axiale de la troisième portion (9) diminue progressivement depuis l'autre espace jusqu'audit un espace.

7. Raccord de tuyau (1) selon l'une quelconque des revendications 1 et 4 à 6, dans lequel
une dimension (11d) de la quatrième portion (11) dans une direction courte de la quatrième portion (11) est inférieure ou égale au diamètre extérieur (3d) de la deuxième portion (3).

8. Raccord de tuyau (1) selon l'une quelconque des revendications 1 et 4 à 7, dans lequel
une surface en section transversale d'un espace (3f) formé dans la deuxième portion (3) perpendiculaire à la direction axiale de la deuxième portion (3) est égale à une surface en section transversale d'un espace (11f) formé dans la quatrième portion (11) perpendiculaire à la direction axiale de la quatrième portion (11).

9. Chauffe-eau (100) comprenant le raccord de tuyau (1) selon l'une quelconque des revendications 1 à 8.
